# EUROPEAN PATENT APPLICATION

(11) **EP 4 407 400 A1**
(43) Date of publication of application: **31.07.2024**
(21) Application number: 22872585.9
(22) Date of filing: 10.08.2022
(51) Int. Cl.: G05D 1/02

(54) **TRANSPORT SYSTEM**

(30) Priority: 22.09.2021 JP 2021153755
(71) Applicant: Murata Machinery, Ltd., Kyoto-shi, Kyoto 601-8326 (JP)
(72) Inventor: KITAMURA, Wataru, Inuyama-shi, Aichi 484-8502 (JP)
(74) Representative: Stöckeler, Ferdinand
(86) International application number: PCT/JP2022/030531
(87) International publication number: WO 2023/047829

(57) **Abstract**

A transport system includes more than one transport vehicle and a controlling apparatus. The transport vehicle includes a tire that is made of resin and transports an item by traveling with the tire in contact with a path. The controlling apparatus controls travel of the transport vehicle. The controlling apparatus sets a standby position for the transport vehicle whose continuous stoppage time exceeds a threshold, blocks at least the standby position in order to prevent another transport vehicle from being located at the standby position, and makes the transport vehicle travel to the standby position.

## Description

### TECHNICAL FIELD

The present invention mainly relates to a transport system for transporting an item by a transport vehicle.

### BACKGROUND ART

PTL 1 discloses a tire deformation prevention apparatus that prevents a resin tire of a transport vehicle from deforming. The transport vehicle includes an in-vehicle controller that outputs a command to a driving apparatus. The in-vehicle controller includes a timer and outputs a command to the driving apparatus when a predetermined time elapses. The driving apparatus rotates the tire by one quarter of a turn forward or backward when it receives the command. Accordingly, a load can be prevented from acting only on a specific portion of the tire so that the tire can be prevented from deforming.

### PRIOR-ART DOCUMENTS

### PATENT DOCUMENTS

PTL 1: Japanese Patent Application Publication No. H11-268895.

### SUMMARY OF THE INVENTION

### PROBLEMS TO BE SOLVED BY THE INVENTION

While PTL 1 discloses the situation where there is one transport vehicle, it does not disclose a situation where there are multiple transport vehicles. When there is more than one transport vehicle, a different control is required than when there is only one transport vehicle.

The present invention is made in view of the situation described above and its main purpose is to provide a configuration that suppresses deformation of a tire of a transport vehicle in a system where multiple transport vehicles transport an item.

### MEANS FOR SOLVING THE PROBLEMS AND EFFECTS THEREOF

The problem to be solved by the present invention is as described above. The means to solve this problem and the effects thereof will be described below.

An aspect of the present invention provides a transport system with a configuration as described below. That is, the transport system includes more than one transport vehicle and a controlling apparatus. The transport vehicle includes a tire which is made of resin and transports an item by traveling with the tire in contact with a path. The controlling apparatus controls travel of the transport vehicle. The controlling apparatus sets a standby position for the transport vehicle whose continuous stoppage time exceeds a threshold, blocks at least the standby position in order to prevent another transport vehicle from being located at the standby position, and makes the transport vehicle travel to the standby position.

Accordingly, since the transport vehicle does not stop continuously for a long period of time, the deformation of the tire of the transport vehicle can be prevented. Also, since the standby position is blocked, the transport vehicle can travel smoothly to the set standby position.

In the above-described transport system, it is preferable that the controlling apparatus measures the continuous stoppage time again after the transport vehicle reaches the standby position and makes the transport vehicle travel to a standby position other than the current standby position when the continuous stoppage time exceeds the threshold.

Accordingly, the transport vehicle can be prevented from stopping for a long period of time even after it reached the standby position.

In the above-described transport system, it is preferable that the controlling apparatus selects one standby position from more than one candidate for the standby position registered in advance and sets the selected standby position for the transport vehicle whose continuous stoppage time exceeds the threshold.

Accordingly, since the candidates for the standby position are registered in advance, the process of setting the standby position can be performed easily.

In the above-described transport system, it is preferable that at least one of the candidates for the standby position is common to more than one transport vehicle.

Accordingly, the candidates for the standby position can be managed easily. In addition, an appropriate position can be selected as the candidate for the standby position regardless of the position of the transport vehicle.

In the above-described transport system, it is preferable to include a configuration as follows. That is, the candidates for the standby position are associated with respective priorities. The priorities are included in criteria for selecting the standby position by the controlling apparatus.

Accordingly, the standby position can be selected with a simple process.

In the above-described transport system, it is preferable to include a configuration as follows. That is, the controlling apparatus calculates a travel cost required for traveling to each of the standby positions from a position that the transport vehicle is stopped at and the travel costs required for traveling to the standby positions are included in the criteria for selecting the standby position by the controlling apparatus.

Accordingly, the selection of the standby position can be made with the energy that the transport vehicle consumes or the time required for the travel taken into account.

In the above-described transport system, it is preferable to include a configuration as follows. That is, the controlling apparatus calculates the number of times that another transport vehicle is required to be moved in order to make the transport vehicle reach the standby position from a position that the transport vehicle is stopped at. The controlling apparatus selects the standby position based on the number of times that another transport vehicle is required to be moved for the transport vehicle whose continuous stoppage time exceeds the threshold to reach each of the candidates for the standby position.

Accordingly, the selection of the standby position can be made with the energy that the other transport vehicle consumes or the time required for the travel taken into account.

In the above-described transport system, it is preferable to include a configuration as follows. That is, the transport vehicle includes a rechargeable battery. The candidates for the standby position include a charging position at which a charging apparatus for charging the battery of the transport vehicle is provided.

Accordingly, the battery can be charged using a standby time when the charging position is selected as the standby position.

In the above-described transport system, it is preferable that the candidates for the standby position include a position determined based on travel histories of more than one transport vehicle.

Accordingly, the selection of the standby position can be made according to the current or past condition of the transport system.

In the above-described transport system, it is preferable to include a configuration as follows. That is, when the continuous stoppage time of the transport vehicle exceeds the threshold, the controlling apparatus blocks a first standby position and a second standby position that is a different position from the first standby position and makes the transport vehicle travel to the first standby position or the second standby position. The controlling apparatus changes a position of the transport vehicle between the first standby position and the second standby position each time the continuous stoppage time of the transport vehicle exceeds the threshold.

Accordingly, since there is no need to search for another standby position after the first standby position and the second standby position are set, the computational load on the controlling apparatus can be reduced.

In the above-described transport system, it is preferable that the first standby position and the second standby position are located on a same straight line in the path.

Accordingly, the position of the transport vehicle can be changed between the first standby position and the second standby position simply by making the transport vehicle travel in a straight line.

In the above-described transport system, it is preferable to include a configuration as follows. That is, the path is arranged along a first direction and a second direction that is orthogonal to the first direction. When the continuous stoppage time exceeds the threshold, the controlling apparatus sets a current position of the transport vehicle as the first standby position and, if a position adjacent to the first standby position in the first direction or in the second direction is available, the controlling apparatus sets the position adjacent to the first standby position as the second standby position.

Accordingly, since the first standby position and the second standby position are adjacent to each other, a distance that the transport vehicle travels when the continuous stoppage time exceeds the threshold can be shortened.

In the above-described transport system, it is preferable to include a configuration as follows. That is, the path includes a standby area for the transport vehicle to stand by at. At least one of the first standby position or the second standby position is included in the standby area.

Accordingly, the transport vehicle can be prevented from interfering with the transportation of an item by another transport vehicle while the transport vehicle stands by at the standby area.

### BRIEF DESCRIPTION OF THE DRAWINGS

FIG. 1 is a drawing showing a schematic configuration of a transport system according to a first embodiment.
FIG. 2 is a block diagram of a transport system according to a first embodiment.
FIG. 3 is a flowchart showing a process for selecting a standby position and making a transport vehicle travel in order to prevent deformation of a tire.
FIG. 4 is a table showing candidates for a standby position that are registered in advance.
FIG. 5 is a drawing showing a schematic configuration of a transport system according to a second embodiment.
FIG. 6 is a block diagram of a transport system according to a second embodiment.

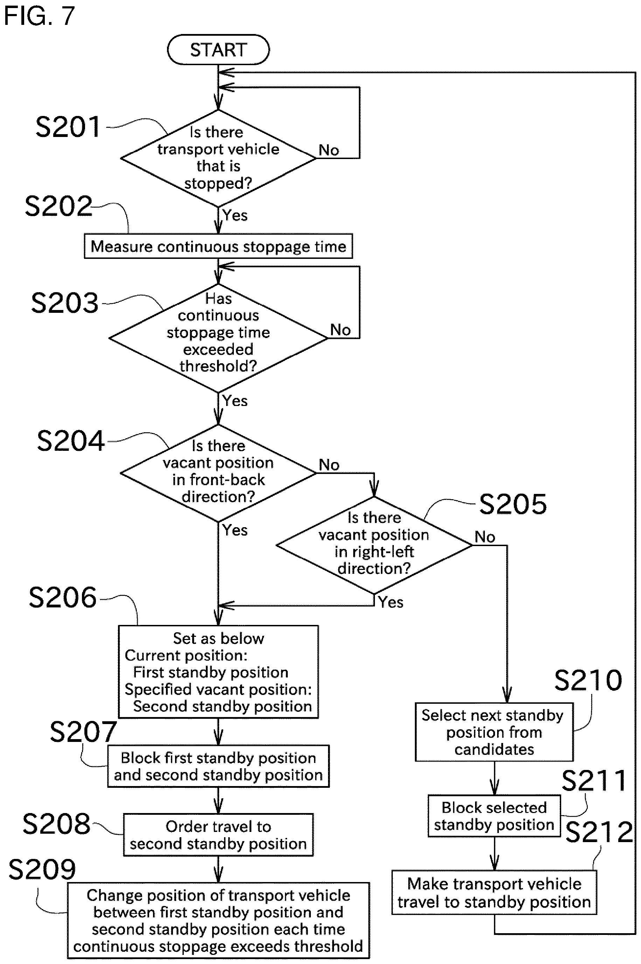

FIG. 7 is a flowchart showing a process for making a transport vehicle travel between two standby positions in order to prevent deformation of a tire.
FIG. 8 is a drawing showing a situation where a transport vehicle A is moved between standby positions adjacent to each other in a front-back direction.
FIG. 9 is a drawing showing a situation where transport vehicles A and B are placed on standby at standby areas.

### EMBODIMENT FOR CARRYING OUT THE INVENTION

An embodiment of the present invention will be described below with reference to the drawings.

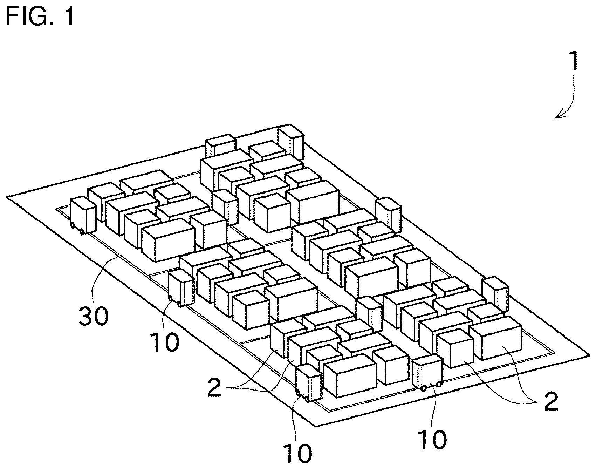

A transport system 1 shown in FIG. 1 is installed in an institution, such as a semiconductor manufacturing plant or a warehouse, that includes more than one processing facility 2. The processing facility 2 installed in the semiconductor manufacturing plant is, for example, a facility that performs a process for manufacturing a semiconductor device or a facility that performs a process of storing a semiconductor wafer. The processing facility 2 installed in the warehouse is a facility that performs a process of storing an item.

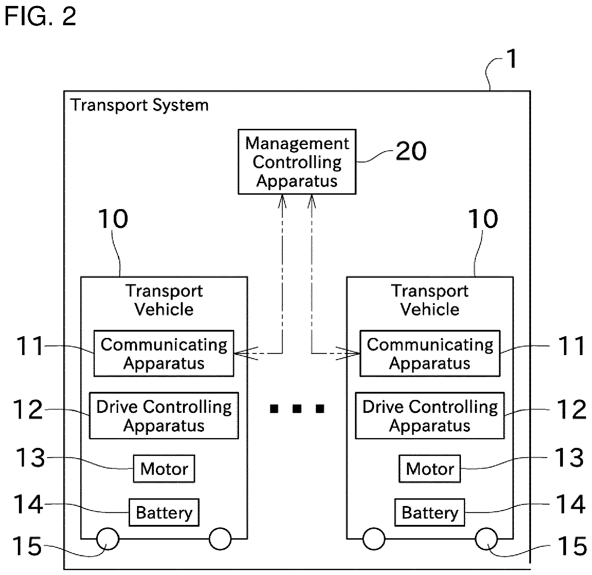

As shown in FIG. 2, the transport system 1 includes more than one transport vehicle 10 and a management controlling apparatus (a controlling apparatus) 20.

The transport vehicle 10 is an AGV (Automated Guided Vehicle) and can perform unmanned travel along a path 30. The transport vehicle 10 includes a mechanism for placing or holding an item. The transport vehicle 10 receives the item from an external transporting apparatus, travels along the path 30, and delivers the item to the processing facility 2. As shown in FIG. 2, the transport vehicle 10 includes a communicating apparatus 11, a drive controlling apparatus 12, a motor 13, a battery 14, and a tire 15.

The communicating apparatus 11 is a wireless communication module for wireless communication with the outside. The communicating apparatus 11 can communicate with the management controlling apparatus 20. The drive controlling apparatus 12 is a computer that includes an arithmetic apparatus, such as a CPU, and a storage apparatus, such as a HDD, a SSD, or a flash memory. The drive controlling apparatus 12 can perform various controls related to the transport vehicle 10 by loading and executing a program stored in the storage apparatus. The drive controlling apparatus 12 operates the motor 13 based on, for example, a command received from the management controlling apparatus 20. The motor 13 generates driving force for making the transport vehicle 10 travel using electric power stored in the battery 14. The driving force generated by the motor 13 is transmitted to the tire 15 via a transmission mechanism. In this manner, the transport vehicle 10 travels. The tire 15 is made of resin, such as urethane.

The path 30 is, for example, a guiding tape, such as a magnetic tape, or an identification tag using a barcode attached on the floor. The transport vehicle 10 travels along the path 30 by detecting the guiding tape or the identification tag. Alternatively, the path 30 may be a guiding member that guides the tire 15 of the transport vehicle 10.

The management controlling apparatus 20 is a computer that includes an arithmetic apparatus, such as a CPU, a storage apparatus, such as a HDD, a SSD, or a flash memory, and a wireless communication module. The management controlling apparatus 20 controls more than one transport vehicle 10. Specifically, the management controlling apparatus 20 communicates directly or indirectly with the transport vehicle 10 to obtain the position of the transport vehicle 10 and the work status of the transport vehicle 10. When it becomes necessary to transport an item, the management controlling apparatus 20 assigns the transport vehicle 10 and makes the transport vehicle 10 travel to a corresponding position in order to transport the item.

As mentioned above, since the tire 15 is made of resin, the tire 15 is prone to be deformed when subjected to a load. For example, when the transport vehicle 10 is stopped, the weight of the transport vehicle 10 is applied to the same portion (a portion that contacts with the road surface) of the tire 15. Thus, when the transport vehicle 10 continues to stop for a long period of time, only a particular portion of the tire 15 may become significantly deformed. As a result, since the distance traveled by one rotation of the tire 15 may become different than normal, it may be impossible to properly perform the control of the position of the transport vehicle 10. Therefore, it is necessary to place the transport vehicle 10 on standby until the shape of the tire 15 deformed returns to normal. Accordingly, the operating rate of the transport vehicle 10 decreases.

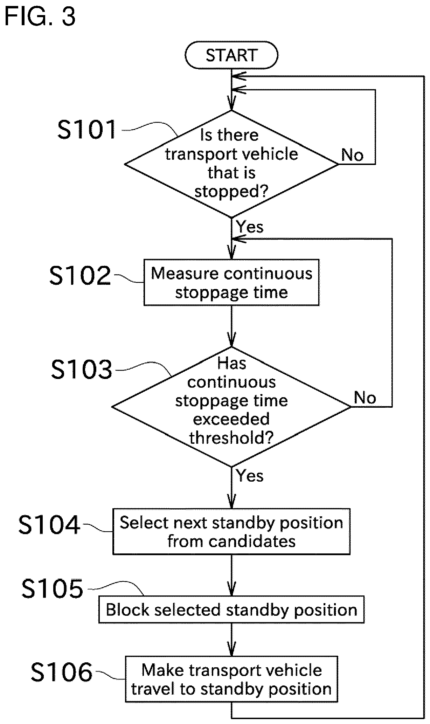

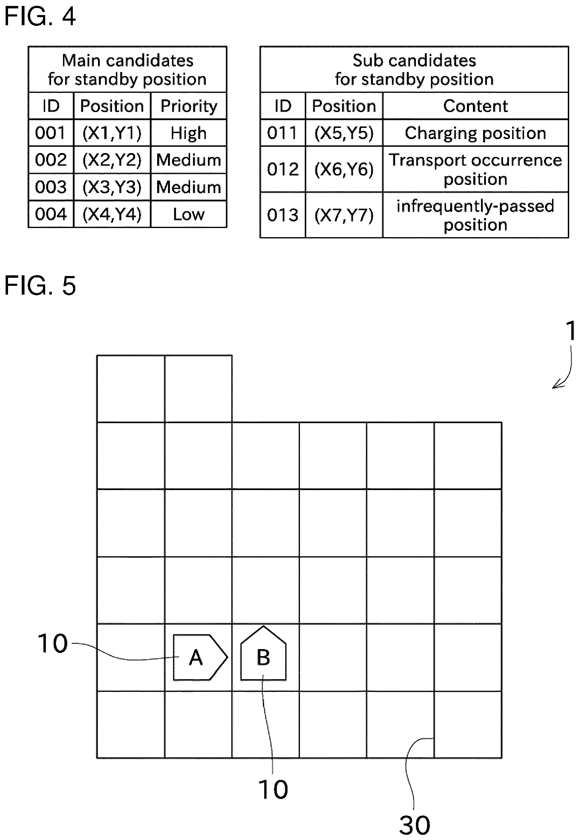

To avoid this situation, the management controlling apparatus 20 performs a process for controlling the deformation of the tire 15. The process will be described below with reference to FIG. 3 and FIG. 4.

First, the management controlling apparatus 20 determines whether it is the transport vehicle 10 that is stopped (S101). As described above, since the management controlling apparatus 20 manages more than one transport vehicle 10 collectively, it can determine whether it is the transport vehicle 10 that is stopped based on this management. The management controlling apparatus 20 may make this determination based on a record related to travel of the transport vehicles 10. Alternatively, the management controlling apparatus 20 may presume that the transport vehicle 10 is stopped when it is not assigned a task.

Next, the management controlling apparatus 20 measures a continuous stoppage time of the transport vehicle 10 that is stopped (S102). The continuous stoppage time is a time for which the transport vehicle 10 is continuously stopped. Since the management controlling apparatus 20 can determine whether the transport vehicle 10 is stopped, it can determine the continuous stoppage time of the transport vehicle 10 using similar means. When the transport vehicle 10 moves, the management controlling apparatus 20 resets the measurement of the continuous stoppage time.

Then, the management controlling apparatus 20 determines whether the continuous stoppage time has exceeded a threshold (S103). As the continuous stoppage time increases, the degree of the deformation of the tire 15 increases. The threshold is defined based on the continuous stoppage time with which the degree of the deformation of the tire 15 exceeds an allowable range. The allowable range is a range of the degree of the deformation of the tire 15 with which the transport vehicle 10 can properly travel. There are various ways to define the threshold. For example, it can be defined by conducting experiments, it can be defined based on the information empirically obtained, or it can be defined by conducting simulations.

When the management controlling apparatus 20 determines that the continuous stoppage time exceeds the threshold, it selects the next standby position for the relevant transport vehicle 10 from candidates for the standby positions (S104). The standby position is a position at which the transport vehicle 10 is placed on standby until it is assigned a task. By changing the standby position, the portion of the tire 15 that contacts with the road surface changes, and thus the deformation of the same portion of the tire 15 can be prevented.

FIG. 4 shows a table showing candidates for the standby position. Specifically, it shows main candidates for the standby position and sub-candidates for the standby position. Firstly, the management controlling apparatus 20 selects the standby position from the main candidates. If other transport vehicles 10 are placed on standby at all of the main candidates for the standby position, the management controlling apparatus 20 selects the standby position from the sub-candidates. The main candidates and the sub-candidates for the standby position are registered and stored in the management controlling apparatus 20 or the like in advance. "In advance" means before starting the operation using the transport system 1 or before starting the process of selecting the standby position (S104). The main candidates and the sub-candidates for the standby position are common to more than one transport vehicle 10. Instead of or in addition to the candidates for the standby position common to more than one transport vehicle 10, an individual standby position for each transport vehicle 10 may be registered.

The path 30 possibly includes a stop position for the transport vehicle 10 to stand by. The stop position is a position at which the transport vehicle 10 does not interfere with another transport vehicle 10 transporting the item and this position is close to the processing facility 2. In the present embodiment, the stop position is registered as the main candidate for the standby position. Specifically, an ID, the location, and the priority of the stop position are registered in the storage apparatus of the management controlling apparatus 20.

In the present embodiment, there are three levels of the priority for the main candidates for the standby position. Alternatively, the number of the levels may be two or more than four. In any case, there is possibly more than one main candidate with the same level of the priority. If there is more than one main candidate with the highest priority that no transport vehicle 10 is located at, the management controlling apparatus 20 selects the main candidate using at least one of a first criterion or a second criterion as follows.

The first criterion is a criterion regarding a travel cost. The travel cost is a parameter commonly used in route search. As the travel distance increases, the travel cost increases. If there is a route that is undesirable to pass, the travel cost of passing through this route becomes larger than the travel cost of passing through other routes. The travel cost may be increased according to the number of times that the transport vehicle 10 turns. When using the first criterion, the management controlling apparatus 20 selects the main candidate for the standby position with the lowest travel cost of the transport vehicle 10 traveling from the position where it is stopped at to the main candidate.

The second criterion is a criterion regarding the influence on the other transport vehicles 10. For example, if another transport vehicle 10 is located on the path that the target transport vehicle 10 travels along from the current position to the standby position, it is necessary to move the other transport vehicle 10 off the path. Since moving the other transport vehicle 10 off the path reduces the operating rate, it is preferable to move the other transport vehicle 10 as few times as possible. When using the second criterion, the management controlling apparatus 20 calculates the number of times that other vehicles 10 are to be moved while the transport vehicle 10 travels from the position where it is stopped to each of the main candidates and selects the main candidate with the lowest number.

Priority may be given to either the first criterion or the second criterion. For example, if the first criterion is given priority, firstly, the main candidate with the lowest travel cost is identified by comparing the main candidates with the same level of priority using the first criterion. If there is only one main candidate with the lowest travel cost, this main candidate is selected as the standby position. If there is more than one main candidate with the lowest travel cost, the main candidate with the lowest number of times that the other transport vehicles 10 are to be moved is selected as the standby position by using the second criterion with respect to these main candidates.

The registration of the priorities for the main candidates may be omitted. In this case, one standby position is selected from the list of the main candidates using the first criterion and the second criterion.

As described above, if other transport vehicles 10 are placed on standby at all of the main candidates for the standby position, the management controlling apparatus 20 selects the standby position from the sub-candidates. As shown in FIG. 4, the sub-candidates include, for example, a charging position, a transport occurrence position, and an infrequently-passed position.

The charging position is a charging station for charging the battery 14 of the transport vehicle 10. By placing the transport vehicle 10 on standby at the charging position, the transport vehicle 10 can be placed on standby while the battery 14 is being charged. The transport occurrence position is a position where the operation of transporting the item is likely to occur. For example, the transport occurrence position is a position near to the processing facility 2 with a high operating rate. By placing the transport vehicle 10 on standby at the transport occurrence position, the time from the occurrence of the transport of the item until the transport vehicle 10 reaches the position of the occurrence can be shortened and the distance that the transport vehicle 10 travels can be shortened compared to the case where the transport vehicle 10 is placed on standby at a different position. The infrequently-passed position is a position where the transport vehicle 10 passes infrequently. By placing the transport vehicle 10 on standby at the infrequently-passed position, the probability of interfering with the travel of the other transport vehicles 10 can be reduced.

The transport occurrence position and the infrequently-passed position can be calculated based on the travel histories with respect to all of the transport vehicle 10. The management controlling apparatus 20 calculates the transport occurrence position and the infrequently-passed position, for example, before the operation of the transport system 1. The management controlling apparatus 20 may calculate and update the transport occurrence position and the infrequently-passed position taking a new travel history into account at an appropriate time.

In the above-described manner, the management controlling apparatus 20 selects the next standby position. Next, the management controlling apparatus 20 blocks the selected standby position (S105). Blocking means an operation of making settings so that the other transport vehicles 10 cannot pass or be stopped at the position. Blocking the selected standby position prevents the other transport vehicles 10 from being located at the selected standby position.

Next, the management controlling apparatus 20 makes the transport vehicle 10 travel to the standby position (S106). The management controlling apparatus 20 sequentially blocks the path 30 that the transport vehicle 10 travels along to prevent the transport vehicle 10 from colliding with the other transport vehicles 10. When the transport vehicle 10 travels from the current position to the standby position, the management controlling apparatus 20 may block the entire path from the current position to the standby position.

By performing the above processes, the transport vehicle 10 whose continuous stoppage time exceeds the threshold can be moved to another standby position. Accordingly, since the portion of the tire 15 that contacts with the road surface or the like changes, the tire 15 can be prevented from deforming. Furthermore, blocking the next standby position prevents the other transport vehicles 10 from being located at the next standby position. Thereafter, the management controlling apparatus 20 performs the process of step S101 again. In other words, if the continuous stoppage time of the transport vehicle 10 that has been moved to the standby position exceeds the threshold again, the management controlling apparatus 20 makes this transport vehicle 10 travel to the next standby position.

Next, a transport system 1 according to a second embodiment will be described below. In the following description, components identical or similar to those of the first embodiment may be marked with the same references in the drawings and the description thereof may be omitted.

As shown in FIG. 5, the transport system 1 of the second embodiment includes a path 30 that follows a grid pattern. That the path 30 follows a grid pattern means that the path 30 is arranged along a first direction (a vertical direction in FIG. 5) and a second direction orthogonal to the first direction (a horizontal direction in FIG. 5). In the second embodiment, the position of a transport vehicle 10 is managed by using a rectangular area formed by portions of the path 30 along the first direction and the second direction as one unit. In an example shown in FIG. 5, a transport vehicle B is located in a rectangular area adjacent to a transport vehicle A. Since the path 30 follows a grid pattern, the transport vehicle 10 of the second embodiment includes a turning function. Specifically, the transport vehicle 10 includes a turning function that changes only its direction without changing its position.

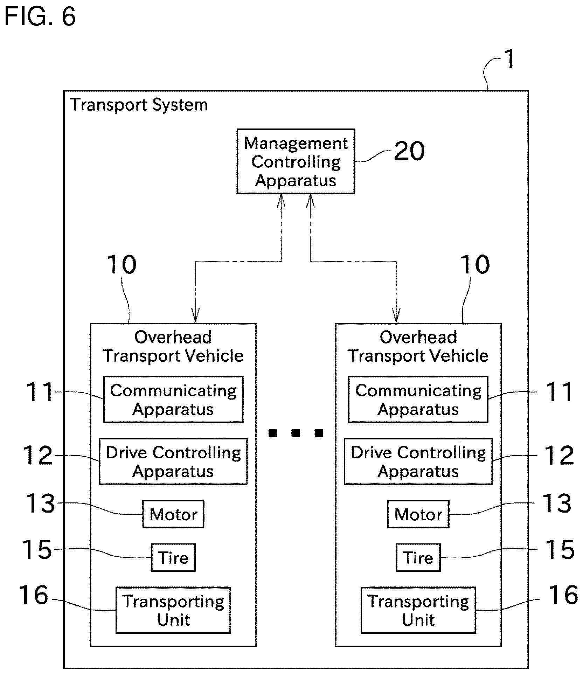

The transport vehicle 10 of the second embodiment is an overhead transport vehicle. The overhead transport vehicle is a vehicle that perform unmanned travel along a rail (the path 30) suspended from a ceiling. As shown in FIG. 6, the transport vehicle 10 of the second embodiment includes a communicating apparatus 11, a drive controlling apparatus 12, a motor 13, and a tire 15, as the transport vehicle 10 of the first embodiment. Since electronic power is supplied to the overhead transport vehicle via the rail, it does not include a battery 14. The overhead transport vehicle also includes a transporting unit 16 for suspending and transporting an item.

A process that a management controlling apparatus 20 performs to prevent the deformation of the tire 15 in the second embodiment will be described below.

Since processes of steps S201, S202, and S203 are the same as steps S101, S102, and S103 of the first embodiment, the descriptions thereof are omitted. When a continuous stoppage time exceeds a threshold, the management controlling apparatus 20 determines whether there is a vacant position in the front-back direction of the transport vehicle 10 (S204). The vacant position in the front-back direction is an area that the transport vehicle 10 can reach only by traveling forward or backward and no other vehicles 10 are located.

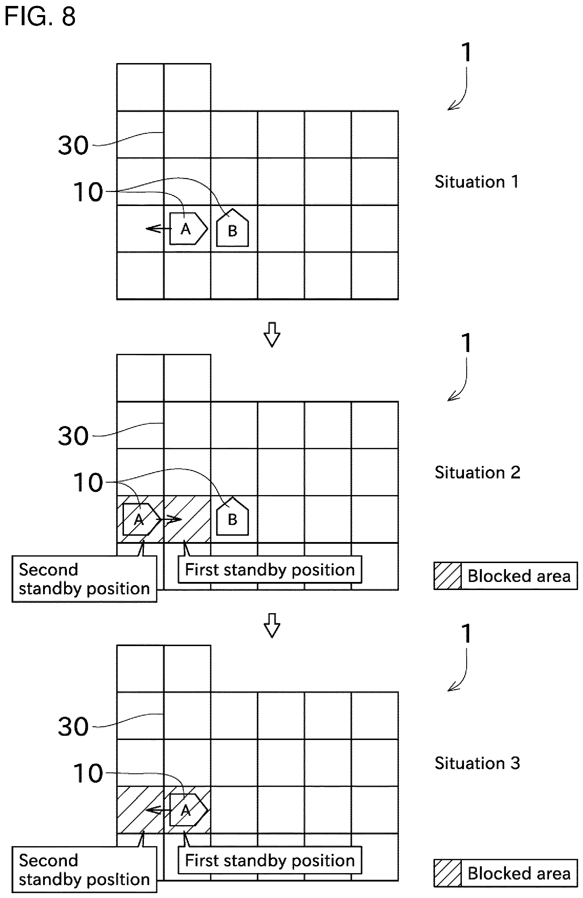

For example, consider the case where the continuous stoppage time of the transport vehicle A exceeds the threshold in an example shown in FIG. 8. The convex side of the transport vehicle A as shown in FIG. 8 is the front of the transport vehicle A. As shown as situation 1 in FIG. 8, since the transport vehicle B is located in front of the transport vehicle A, the transport vehicle A cannot travel forward. Since no other transport vehicles are located behind the transport vehicle A, the transport vehicle A can travel backward. In other words, in the example shown in FIG. 8, there is a vacant position in the front-back direction.

If there is no vacant position in the front-back direction, the management controlling apparatus 20 determines whether there is a vacant position in the right-left direction (S205). To travel to the vacant position in the right-left direction, the transport vehicle 10 has to turn. Therefore, the amount of time and electric power required to travel to the vacant position in the right-left direction is larger than the amount of those required to travel to the vacant position in the front-back direction. Hence, in the present embodiment, the management controlling apparatus 20 searches for the vacant position in the front-back direction first, and then searches for the vacant position in the right-left direction if there is no vacant position in the front-back direction. The vacant positions in the front-back direction and the right-left direction may be searched for at the same time.

If there is a vacant position in the front-back direction or in the right-left direction, the management controlling apparatus 20 sets the current position as a first standby position and sets the specified vacant position (the vacant position in the front-back direction or the vacant position in the right-left direction) as a second standby position (S206).

Next, the management controlling apparatus 20 blocks the first standby position and the second standby position as shown in situation 2 in FIG. 8 (S207). Next, the management controlling apparatus 20 makes the transport vehicle 10 travel from the first standby position to the second standby position as shown in situation 3 in FIG. 8 (S208). Accordingly, since the portion of the tire 15 that is in contact with the road surface or the like changes, the tire 15 can be prevented from deforming. The management controlling apparatus 20 keeps blocking the first standby position and the second standby position even after the transport vehicle 10 reaches to the second standby position. Then, the management controlling apparatus 20 changes the position of the transport vehicle 10 between the first standby position and the second standby position each time the continuous stoppage time exceeds the threshold (S209).

Accordingly, the process of searching for the standby position does not have to be performed for the second and subsequent times. Thus, the deformation of the tire 15 can be prevented with a simple process.

If there is no vacant position in the front-back direction and in the right-left direction, the same process as in the first embodiment is performed. Specifically, the management controlling apparatus 20 selects the next standby position from candidates (S210), blocks the selected standby position (S211), and makes the transport vehicle 10 travel to the selected standby position (S212).

In the second embodiment, the position at which the transport vehicle 10 is located when the continuous stoppage time exceeds the threshold is set as the first standby position. Alternatively, another position may be set as the first standby position. For example, if the second standby position located in the front-back direction or in the right-left direction is far from the position at which the transport vehicle 10 is when the continuous stoppage time exceeds the threshold, a position close to the second standby position (a vacant position located in the front-back direction or in the right-left direction with respect to the second standby position) may be set as the first standby position.

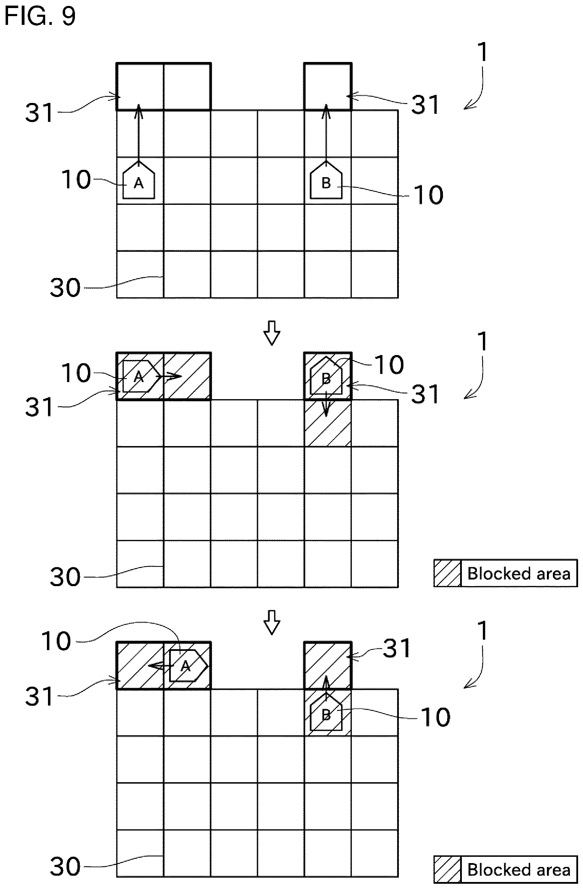

Next, a variation of the second embodiment will be described below with reference to FIG. 9.

The path 30 of the variation includes a standby area 31. The standby area 31 is an area for the transport vehicle 10 to stand by at and the transport vehicle 10 transporting the item does not pass this area. The standby area 31 is an area that is arranged, for example, at an end in the first direction or in the second direction so that the transport vehicle 10 standing by at this area does not interfere with the travel of another transport vehicle 10. The standby area 31 is treated as a candidate for the standby position registered in advance. That is, in the second embodiment, if there is no vacant position in the front-back direction or in the right-left direction, the management controlling apparatus 20 determines whether there is a vacant position in the standby area 31 in step S210. If there is a vacant position in the standby area 31, the management controlling apparatus 20 sets the vacant position as the next standby position and makes the transport vehicle 10 travel to the position.

The management controlling apparatus 20 may search for a vacant position in the standby area 31 first, instead of performing a process of searching for a vacant position in the front-back direction and the right-left direction first. The management controlling apparatus 20 may set the first standby position and the second standby position in such a way that they are included in the standby area 31 if there is more than one vacant position in the standby area 31. If there is only one vacant position in the standby area 31, the management controlling apparatus 20 may set them in such a way that either the first standby position or the second standby position is included in the standby area 31.

The variant in which the path 30 includes the standby area 31 can be applied to the first embodiment. For example, a standby path (a bypass path) other than the path 30 used for a usual travel may be arranged and used as the standby area 31.

As described above, the transport system 1 of the above embodiment includes more than one transport vehicle 10 and the management controlling apparatus 20. The transport vehicle 10 includes the tire 15 made of resin and transports the item by traveling with the tire 15 in contact with the path 30. The management controlling apparatus 20 controls the travel of the transport vehicle 10. The management controlling apparatus 20 sets the standby position for the transport vehicle 10 whose continuous stoppage time exceeds the threshold, blocks at least the standby position in order to prevent another transport vehicle 10 from being located at the standby position, and makes the transport vehicle 10 travel to the standby position.

Accordingly, since the transport vehicle 10 does not stop continuously for a long period of time, the deformation of the tire 15 of the transport vehicle 10 can be prevented. Also, since the standby position is blocked, the transport vehicle 10 can travel smoothly to the set standby position.

In the transport system 1 of the above embodiment, the management controlling apparatus 20 measures the continuous stoppage time again after the transport vehicle 10 reaches the standby position and makes the transport vehicle 10 travel to a standby position other than or different from the current standby position when the continuous stoppage time exceeds the threshold.

Accordingly, the transport vehicle 10 can be prevented from stopping for a long period of time even after it reached the standby position.

In the transport system 1 of the above embodiment, the management controlling apparatus 20 selects the standby position from more than one candidate for the standby position registered in advance and sets the selected standby position for the transport vehicle 10 whose continuous stoppage time exceeds the threshold.

Accordingly, since the candidates for the standby position are registered in advance, the process of setting the standby position can be performed easily.

In the transport system 1 of the above embodiment, at least one of the candidates for the standby position is common to more than one transport vehicle 10.

Accordingly, the candidates for the standby position can be managed easily. In addition, an appropriate position can be selected as the candidate for the standby position regardless of the position of the transport vehicle 10.

In the transport system 1 of the above embodiment, the candidates for the standby position are associated with respective priorities. The priorities are included in criteria for selecting the standby position by the management controlling apparatus 20.

Accordingly, the standby position can be selected with a simple process.

In the transport system 1 of the above embodiment, the management controlling apparatus 20 calculates the travel cost required for traveling to each of the standby positions from the position that the transport vehicle 10 is stopped at and the travel costs required for traveling to the standby positions are included in the criteria for selecting the standby position by the management controlling apparatus 20.

Accordingly, the selection of the standby position can be made with the energy that the transport vehicle 10 consumes or the time required for the travel taken into account.

In the transport system 1 of the above embodiment, the management controlling apparatus 20 calculates the number of times that another transport vehicle 10 is required to be moved in order to make the transport vehicle 10 reach the standby position from which the transport vehicle 10 is stopped at. The management controlling apparatus 20 selects the standby position based on the number of times that another transport vehicle 10 is required to be moved for the transport vehicle 10 whose continuous stoppage time exceeds the threshold to reach each of the candidates for the standby position.

Accordingly, the selection of the standby position can be made with the energy that the other transport vehicle 10 consumes taken into account.

In the transport system 1 of the above embodiment, the transport vehicle 10 includes the rechargeable battery 14. The candidates for the standby position includes the charging position at which a charging apparatus that can charge the battery 14 of the transport vehicle 10 is provided.

Accordingly, the battery 14 can be charged using a standby time when the charging position is selected as the standby position.

In the transport system 1 of the above embodiment, the candidates for the standby position include the position determined based on the travel histories of more than one transport vehicle 10.

Accordingly, the selection of the standby position can be made according to the current or past condition of the transport system 1.

In the transport system 1 of the above embodiment, when the continuous stoppage time of the transport vehicle 10 exceeds the threshold, the management controlling apparatus 20 blocks the first standby position and the second standby position that is a different position from the first standby position and makes the transport vehicle 10 travel to the first standby position or the second standby position. The management controlling apparatus 20 changes the position of the transport vehicle 10 between the first standby position and the second standby position each time the continuous stoppage time of the transport vehicle 10 exceeds the threshold.

Accordingly, since there is no need to search for another standby position after the first standby position and the second standby position are set, the computational load on the management controlling apparatus 20 can be reduced.

In the transport system 1 of the above embodiment, the first standby position and the second standby position are located on the same straight line in the path 30.

Accordingly, the position of the transport vehicle 10 can be changed between the first standby position and the second standby position simply by making the transport vehicle travel in a straight line.

In the transport system 1 of the above embodiment, the path 30 is arranged along the first direction and the second direction orthogonal to the first direction. When the continuous stoppage time exceeds the threshold, the management controlling apparatus 20 sets the current position of the transport vehicle 10 as the first standby position and, if the position adjacent to the first standby position in the first direction or in the second direction is available, the management controlling apparatus 20 sets the position adjacent to the first standby position as the second standby position.

Accordingly, since the first standby position and the second standby position are adjacent to each other, the distance that the transport vehicle 10 travels when the continuous stoppage time exceeds the threshold can be shortened.

In the transport system 1 of the above embodiment, the path 30 includes the standby area 31 for the transport vehicle 10 to stand by at. At least one of the first standby position or the second standby position is included in the standby area 31.

Accordingly, the transport vehicle 10 can be prevented from interfering with the transportation of the item by other transport vehicles 10 while the transport vehicle 10 stands by at the standby area 31.

### Embodiments may include the following:

### [Feature 1]

A transport system, comprising:
more than one transport vehicle that includes a tire which is made of resin and transports an item by travelling with the tire in contact with a path; and
a controlling apparatus that controls travel of the transport vehicle,
wherein the controlling apparatus sets a standby position for the transport vehicle whose continuous stoppage time exceeds a threshold, blocks at least the standby position in order to prevent another transport vehicle from being located at the standby position, and makes the transport vehicle travel to the standby position.

### [Feature 2]

The transport system according to feature 1, wherein the controlling apparatus measures the continuous stoppage time again after the transport vehicle reaches the standby position and makes the transport vehicle travel to a standby position other than the current standby position when the continuous stoppage time exceeds the threshold.

### [Feature 3]

The transport system according to feature 1 or 2, wherein the controlling apparatus selects one standby position from more than one candidate for the standby position registered in advance and sets the selected standby position for the transport vehicle whose continuous stoppage time exceeds the threshold.

### [Feature 4]

The transport system according to feature 3, wherein at least one of the candidates for the standby position is common to more than one transport vehicle.

### [Feature 5]

The transport system according to feature 3 or 4, wherein the candidates for the standby position are associated with respective priorities, and
wherein the priorities are included in criteria for selecting the standby position by the controlling apparatus.

### [Feature 6]

The transport system according to any one of features 3 to 5, wherein the controlling apparatus calculates a travel cost required for traveling to each of the standby positions from a position that the transport vehicle is stopped at, and
wherein the travel costs required for traveling to the standby positions are included in the criteria for selecting the standby position by the controlling apparatus.

### [Feature 7]

The transport system according to any one of features 3 to 6, wherein the controlling apparatus calculates the number of times that another transport vehicle is required to be moved in order to make the transport vehicle reach the standby position from a position that the transport vehicle is stopped at, and
wherein the controlling apparatus selects the standby position based on the number of times that another transport vehicle is required to be moved for the transport vehicle whose continuous stoppage time exceeds the threshold to reach each of the candidates for the standby position.

### [Feature 8]

The transport system according to any one of features e to 7, wherein the transport vehicle includes a rechargeable battery, and
wherein the candidates for the standby position include a charging position at which a charging apparatus for charging the battery of the transport vehicle is provided.

### [Feature 9]

The transport system according to any one of features 3 to 8, wherein the candidates for the standby position include a position determined based on travel histories of more than one transport vehicle.

### [Feature 10]

The transport system according to feature 1 or 2, wherein, when the continuous stoppage time of the transport vehicle exceeds the threshold, the controlling apparatus blocks a first standby position and a second standby position that is a different position from the first standby position and makes the transport vehicle travel to the first standby position or the second standby position, and
wherein the controlling apparatus changes a position of the transport vehicle between the first standby position and the second standby position each time the continuous stoppage time of the transport vehicle exceeds the threshold.

### [Feature 11]

The transport system according to feature 10, wherein the first standby position and the second standby position are located on a same straight line in the path.

### [Feature 12]

The transport system according to feature 11, wherein the path is arranged along a first direction and a second direction that is orthogonal to the first direction, and
wherein, when the continuous stoppage time exceeds the threshold, the controlling apparatus sets a current position of the transport vehicle as the first standby position and, if a position adjacent to the first standby position in the first direction or in the second direction is available, the controlling apparatus sets the position adjacent to the first standby position as the second standby position.

### [Feature 13]

The transport system according to feature 10 or 11, wherein the path includes a standby area for the transport vehicle to stand by at, and
wherein at least one of the first standby position or the second standby position is included in the standby area.

Although the preferred embodiments and variations have been described above, the above-described configuration can be modified, for example, as follows.

The features of the first embodiment and the second embodiment may be combined. For example, the feature of the second embodiment of changing the position between the first standby position and the second standby position may be applied to the AGV of the first embodiment. Alternatively, the method of the first embodiment for specifying the standby position may be applied to the overhead transport vehicle of the second embodiment.

The flowcharts shown in the above embodiment are disclosed just as examples and some processes may be omitted, the contents of some processes may be changed, or a new process may be added. For example, in the flowchart in FIG. 3, a process of calculating an appropriate standby position according to the current condition of the transport may be performed instead of the process of selecting the next standby position from the candidates that are registered in advance (S104).

Although the AGV and the overhead transport vehicle are disclosed as the examples for the transport vehicle 10 in the above embodiment, the present invention may be applied to another vehicle (for example, a suspension crane). Although the overhead transport vehicle of the second embodiment includes the turning function, the present invention may be applied to an overhead transport vehicle that does not include a turning function.

### DESCRIPTION OF THE REFERENCE NUMERALS

- 1: Transport system
- 10: Transport vehicle
- 11: Communicating apparatus
- 12: Drive controlling apparatus
- 13: Motor
- 14: Battery
- 15: Tire
- 20: Management controlling apparatus (controlling apparatus)
- 30: Path

## Claims

1. A transport system, comprising:
more than one transport vehicle that includes a tire which is made of resin and transports an item by travelling with the tire in contact with a path; and
a controlling apparatus that controls travel of the transport vehicle,
wherein the controlling apparatus sets a standby position for the transport vehicle whose continuous stoppage time exceeds a threshold, blocks at least the standby position in order to prevent another transport vehicle from being located at the standby position, and makes the transport vehicle travel to the standby position.

2. The transport system according to claim 1, wherein the controlling apparatus measures the continuous stoppage time again after the transport vehicle reaches the standby position and makes the transport vehicle travel to a standby position other than the current standby position when the continuous stoppage time exceeds the threshold.

3. The transport system according to claim 1, wherein the controlling apparatus selects one standby position from more than one candidate for the standby position registered in advance and sets the selected standby position for the transport vehicle whose continuous stoppage time exceeds the threshold.

4. The transport system according to claim 3, wherein at least one of the candidates for the standby position is common to more than one transport vehicle.

5. The transport system according to claim 3, wherein the candidates for the standby position are associated with respective priorities, and
wherein the priorities are included in criteria for selecting the standby position by the controlling apparatus.

6. The transport system according to claim 3, wherein the controlling apparatus calculates a travel cost required for traveling to each of the standby positions from a position that the transport vehicle is stopped at, and
wherein the travel costs required for traveling to the standby positions are included in the criteria for selecting the standby position by the controlling apparatus.

7. The transport system according to claim 3, wherein the controlling apparatus calculates the number of times that another transport vehicle is required to be moved in order to make the transport vehicle reach the standby position from a position that the transport vehicle is stopped at, and
wherein the controlling apparatus selects the standby position based on the number of times that another transport vehicle is required to be moved for the transport vehicle whose continuous stoppage time exceeds the threshold to reach each of the candidates for the standby position.

8. The transport system according to claim 3, wherein the transport vehicle includes a rechargeable battery, and
wherein the candidates for the standby position include a charging position at which a charging apparatus for charging the battery of the transport vehicle is provided.

9. The transport system according to claim 3, wherein the candidates for the standby position include a position determined based on travel histories of more than one transport vehicle.

10. The transport system according to claim 1, wherein, when the continuous stoppage time of the transport vehicle exceeds the threshold, the controlling apparatus blocks a first standby position and a second standby position that is a different position from the first standby position and makes the transport vehicle travel to the first standby position or the second standby position, and
wherein the controlling apparatus changes a position of the transport vehicle between the first standby position and the second standby position each time the continuous stoppage time of the transport vehicle exceeds the threshold.

11. The transport system according to claim 10, wherein the first standby position and the second standby position are located on a same straight line in the path.

12. The transport system according to claim 11, wherein the path is arranged along a first direction and a second direction that is orthogonal to the first direction, and
wherein, when the continuous stoppage time exceeds the threshold, the controlling apparatus sets a current position of the transport vehicle as the first standby position and, if a position adjacent to the first standby position in the first direction or in the second direction is available, the controlling apparatus sets the position adjacent to the first standby position as the second standby position.

13. The transport system according to claim 10, wherein the path includes a standby area for the transport vehicle to stand by at, and
wherein at least one of the first standby position or the second standby position is included in the standby area.
